# EUROPEAN PATENT APPLICATION

(11) **EP 4 682 413 A1**
(43) Date of publication of application: **21.01.2026**
(21) Application number: 23927599.3
(22) Date of filing: 28.11.2023
(51) Int. Cl.: F16K 27/00, F16K 11/22, F16K 27/02

(54) **VALVE DEVICE**

(30) Priority: 13.03.2023 JP 2023039145
(71) Applicant: Fujikoki Corporation, Tokyo 158-0082 (JP)
(72) Inventor: HOSAKA, Yuta, Tokyo 158-0082 (JP); KONDO, Daisuke, Tokyo 158-0082 (JP); ANDO, Yu, Tokyo 158-0082 (JP); TOMINAGA, Yuta, Tokyo 158-0082 (JP)
(74) Representative: Ter Meer Steinmeister & Partner
(86) International application number: PCT/JP2023/042621
(87) International publication number: WO 2024/189992

(57) **Abstract**

A valve device includes: plural blocks each including a first surface at which an inlet of a fluid is formed and a second surface at which an outlet is formed for flowing out of the fluid that flows in from the inlet, the second surface being provided on a side that is different from the first surface; a control unit provided between the inlet and the outlet at at least one of the plural blocks and configured to control the flow of a fluid; an inflow-side passage configured to link the inlet and the control unit; and an outflow-side passage configured to link the outlet and the control unit, and the dimension from a lower surface to the inlet and the dimension from the lower surface to the outlet are set to be equal in each block.

## Description

### Technical Field

The present disclosure relates to a valve device.

### Background Art

Japanese Patent Application Laid-Open No. 2021-110409 discloses a flow adjustment device for control of the flow of a fluid, such as an on-off valve or a flow adjustment valve.

### SUMMARY OF INVENTION

### Technical Problem

Solenoid valves and electric valves are used as on-off valves and flow adjustment valves, and a plurality of solenoid valves and electric valves may be connected to form a valve device for control of the flow of a fluid.

Solenoid valves and electric valves have a structure in which the inlet height and the outlet height are different. For example, in the case of aligning and connecting a solenoid valve and an electric valve in the lateral direction, the outlet of the solenoid valve and the inlet of the electric valve need to be connected with a pipe.

However, connecting a solenoid valve and an electric valve via a pipe requires a space for disposition of the pipe and increases the size of the valve device, and thus has room for improvement.

An object of the disclosure is to provide a valve device that is downsized in consideration of the above fact.

### Solution to Problem

A valve device according to a first aspect includes: a plurality of blocks each including a first surface at which an inlet of a fluid is formed and a second surface at which an outlet is formed for flowing out of the fluid that flows in from the inlet, and the second surface being provided on a side that is different from the first surface; a control unit provided at at least one of the plurality of blocks and configured to control a flow of a fluid between the inlet and the outlet; an inflow-side passage configured to link the inlet and the control unit; and an outflow-side passage configured to link the outlet and the control unit, and in the plurality of blocks, a dimension from a third surface to the inlet and a dimension from the third surface to the outlet are set to be equal, the third surface being a reference portion that is orthogonal to the first surface and the second surface.

In the valve device according to the first aspect, the dimension from the third surface to the outlet in one block and the dimension from the third surface to the inlet in the other block are equal, and therefore the outlet of the one block and the inlet of the other block can be connected so as to face each other by aligning the third surface of the one block and the third surface of the other block and making the first surface of the one block and the second surface of the other block face each other. Thus, a fluid that flows in from the inlet of the one block can flow out from the outlet of the other block.

In a case in which the dimension from the third surface to the outlet in one block and the dimension from the third surface to the inlet in the other block are different, the outlet of the one block and the inlet of the other block cannot face each other when the third surface of the one block and the third surface of the other block are aligned and the first surface of the one block and the second surface of the other block are made to face each other, and connection between the outlet and the inlet needs use of a pipe or the like for connection of the outlet and inlet, and requires a space for disposition of the pipe.

At least one block is provided with the control unit configured to control the flow of a fluid between the inlet and the outlet. Therefore, when a fluid that flows in from the inlet of one block flows out from the outlet of the other block, the flow rate of the fluid that flows out from the outlet can be adjusted by controlling the flow of the fluid in the control unit.

A valve device according to a second aspect is the valve device according to the first aspect including: a first pin hole provided at an inlet side in each of the plurality of blocks; a second pin hole provided at an outlet side in each of the plurality of blocks; and a seal ring mounting portion provided at the second surface of one of the plurality of blocks or the first surface of another of the plurality of blocks and mounted with an elastic seal ring capable of being in close contact with the first surface of the other of the plurality of blocks or the second surface of the one of the plurality of blocks, and a connection pin is inserted into the second pin hole of the one of the plurality of blocks and the first pin hole of the other of the plurality of blocks to connect the one of the plurality of blocks and the other of the plurality of blocks, the outlet of the one of the plurality of blocks and the inlet of the other of the plurality of blocks are linked to each other, and the elastic seal ring is compressed between the seal ring mounting portion and a surface facing the seal ring mounting portion.

In the valve device according to the second aspect, the connection pin is inserted into the second pin hole of one block and the first pin hole of the other block to connect the one block and the other block, the outlet of the one block and the inlet of the other block are linked to each other, and the elastic seal ring is compressed between the seal ring mounting portion and the surface facing the seal ring mounting portion.

Thus, the elastic seal ring is in close contact with the seal ring mounting portion and the block facing the seal ring, and the portion connecting the inlet and the outlet is sealed to suppress leakage of a fluid from the portion.

Furthermore, the repulsive force of the compressed elastic seal ring (force to return to the original shape before compression) presses the outer peripheral surface of the connection pin against the inner peripheral surface of the first pin hole and the inner peripheral surface of the second pin hole to generate a frictional force between the outer peripheral surface of the connection pin and the inner peripheral surface of the first pin hole and between the outer peripheral surface of the connection pin and the inner peripheral surface of the second pin hole, and the frictional force suppresses removal of the connection pin from the first pin hole and the second pin hole.

A valve device according to a third aspect is the valve device according to the first aspect or the second aspect in which the inflow-side passage and the outflow-side passage are inclined in an identical direction with respect to the third surface.

In the valve device according to the third aspect, the inflow-side passage and the outflow-side passage are inclined in an identical direction with respect to the third surface, and thus in a configuration in which the control unit is provided in the middle of a fluid passage, the dimensions of the inlet and the outlet from the third surface can be the same dimension.

A valve device according to a fourth aspect is the valve device according to any one aspect of the first to the third aspects in which at least one of the plurality of blocks includes a second outlet that is different from the outlet and provided in a fourth surface different from the first surface and the second surface, a dimension from the third surface to the second outlet is set to be equal to the dimension from the third surface to the outlet, and a fluid that flows in from the inlet is allowed to flow out from the second outlet.

At least one block of the valve device according to the fourth aspect includes the second outlet that is different from the outlet, the second outlet being provided at the fourth surface that is different from the first surface and the second surface, the dimension from the third surface to the second outlet is set to be equal to the dimension from the third surface to the outlet, and a fluid that flows in from the inlet is allowed to flow out from the second outlet. Therefore, the second outflow portion provided in the fourth surface and the inlet provided in the first surface of the other block can be connected so as to face each other by making the fourth surface face the first surface which is included in the other block and in which the inlet is formed.

### Advantageous Effects of Invention

As described above, according to the valve device of the disclosure, downsizing can be achieved.

### BRIEF DESCRIPTION OF DRAWINGS

Fig. 1 is a longitudinal sectional view illustrating a valve device according to a first embodiment.
Fig. 2 is a perspective view obtained by sectioning a part showing a block of a valve device according to the first embodiment.
Fig. 3 is a perspective view illustrating a block of an on-off valve according to a second embodiment.
Fig. 4 is a plan view illustrating a block of an on-off valve according to the second embodiment.
Fig. 5 is a perspective view illustrating a block of a valve device according to a third embodiment.
Fig. 6 is a perspective view illustrating a block of an on-off valve according to a fourth embodiment.
Fig. 7 is a plan view illustrating a block of an on-off valve according to the fourth embodiment.
Fig. 8 is a plan view illustrating a block according to another embodiment.
Fig. 9 is a longitudinal sectional view (sectional view along the 9-9 line in Fig. 8) illustrating a block according to another embodiment.

### DESCRIPTION OF EMBODIMENTS

### [First Embodiment]

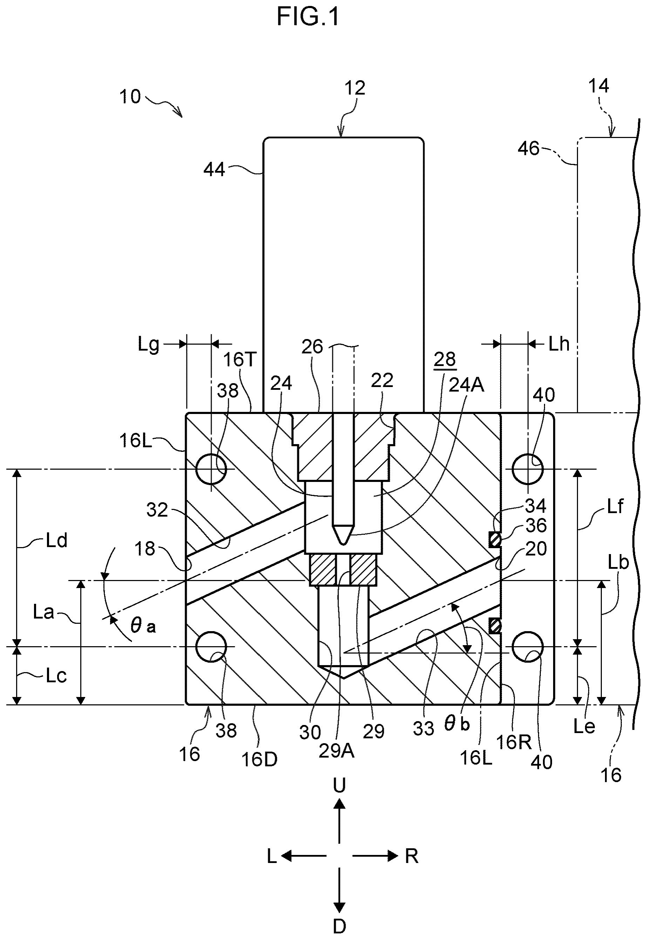

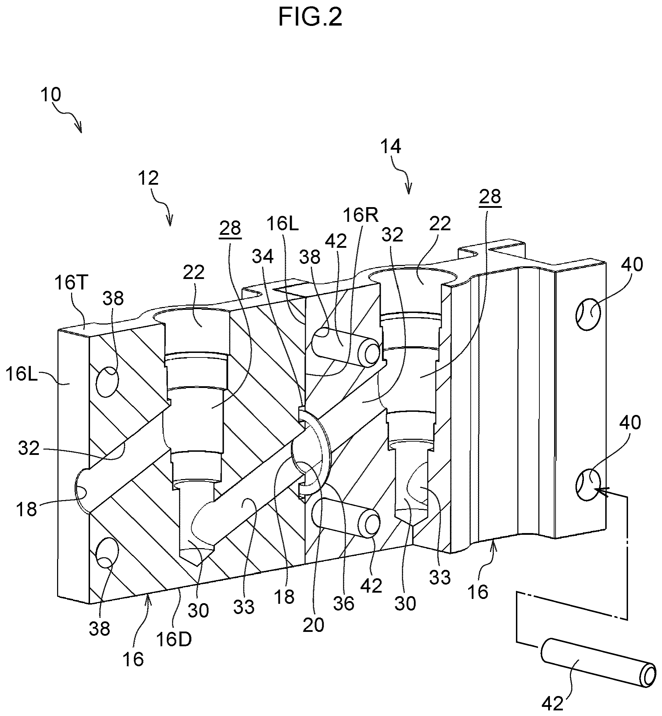

A valve device 10 according to a first embodiment of the disclosure will be described with reference to Figs. 1 and 2.

The valve device 10 of the present embodiment includes one on-off valve 12 and one flow adjustment valve 14.

In the present description, descriptions indicating positions and directions such as upper and lower, and left and right are given for convenience in accordance with the drawings in order to avoid a complicated description, and do not necessarily indicate positions and directions in an actual use state. In the present description, a side in which a drive unit 44 described below is disposed is referred to as an upper side, and a side in which a block 16 is disposed is referred to as a lower side.

### (On-Off Valve)

As illustrated in Fig. 1, the on-off valve 12 of the embodiment is a so-called solenoid valve, and includes a block 16 as a valve body.

The block 16 includes a first surface 16L, in a side pointed by the arrow L in the drawing, including an inlet 18 as an opening through which a fluid flows in, and the block 16 includes a second surface 16R, in a side pointed by the arrow R in the drawing (side opposite from the first surface 16L), including an outlet 20 as an opening. The first surface 16L and the second surface 16R are each a smooth plane, and are parallel to each other.

A lower surface 16D of the block 16 is a smooth plane. The lower surface 16D is perpendicular to the first surface 16L and the second surface 16R, and is an example of a third surface (reference portion) of the disclosure.

The dimension La in the height direction (vertical direction) from the lower surface 16D to the inlet 18 is equal to the dimension Lb in the height direction from the lower surface 16D to the outlet 20. That is, the inlet 18 and the outlet 20 have the same diameter and the same height position from the lower surface 16D.

The block 16 includes a stepped hole 22 formed in the center of the block 16 from an upper surface 16T toward the lower surface 16D.

In the stepped hole 22, an annular guide member 26 for guiding of a valve shaft 24 is attached to an upper portion, a lower side of the stepped hole 22 in the guide member 26 is a valve chest 28, a valve hole member 29 in which a valve hole 29A is formed is attached to a lower side of the valve chest 28, and a lower side of the valve hole member 29 is a vertical passage 30.

The valve shaft 24, the valve chest 28, and the valve hole member 29 are an example of a control unit of the disclosure.

The inlet 18 and the valve chest 28 are connected by an inflow-side passage 32 inclined at an angle θa with respect to the direction parallel to the lower surface 16D (horizontal direction), and the outlet 20 and the vertical passage 30 are connected by an outflow-side passage 33 inclined at an angle θb with respect to the direction parallel to the lower surface 16D. In the embodiment, the angle θa and the angle θb are set to the same angle.

The inflow-side passage 32 and the outflow-side passage 33 are each formed into a straight line shape by machining (cutting) the block 16 including a metal material or the like. The inflow-side passage 32 and the outflow-side passage 33 each formed into a straight line shape can be more easily formed than those in the case of forming a passage into a shape other than a straight line shape (such as a bent shape or curved shape).

On the second surface 16R, a seal ring mounting portion 34 that is an annular groove is formed so as to surround the outlet 20, and the seal ring mounting portion 34 is mounted with an O-ring 36 that is an example of an elastic seal ring. The O-ring 36 partially protrudes from the second surface 16R in a state of being mounted on the seal ring mounting portion 34.

In the block 16, a pair of first pin holes 38 vertically separated from each other are formed in the first surface 16L side, and a pair of second pin holes 40 vertically separated from each other are formed in the second surface 16R side.

The dimension measured along the vertical direction from the lower surface 16D to the lower first pin hole 38 is represented by Lc, the interval dimension measured along the vertical direction between the lower first pin hole 38 and the upper first pin hole 38 is represented by Ld, the dimension measured along the vertical direction from the lower surface 16D to the lower second pin hole 40 is represented by Le, the interval dimension measured along the vertical direction between the lower second pin hole 40 and the upper second pin hole 40 is represented by Lf, and the dimensions are set to satisfy Lc = Le and Ld = Lf.

The dimension measured along the horizontal direction from the first surface 16L to the first pin hole 38 is represented by Lg, the dimension measured along the horizontal direction from the second surface 16R to the second pin hole 40 is represented by Lh, and the dimensions are set to satisfy Lg = Lh.

All of the pin holes 38 and the pin holes 40 have the same diameter, and are provided in parallel to each other. As illustrated in Fig. 2, a connection pin 42 having a constant diameter can be inserted (fitted) into the pin holes 38 and the pin holes 40. In Fig. 2, only the block 16 of the on-off valve 12 and the block 16 of the flow adjustment valve 14 are illustrated, and the other configurations are not illustrated.

As illustrated in Fig. 1, the drive unit 44 configured to drive the valve shaft 24 is provided on an upper portion of the block 16. The drive unit 44 of the on-off valve 12 moves the valve shaft 24 along the axial direction of the stepped hole 22. In other words, the drive unit 44 of the on-off valve 12 linearly reciprocates the valve shaft 24. The lower end side of the valve shaft 24 is a valve portion 24A processed into a tapered shape, and as illustrated in Fig. 1, is moved between a first state (valve open state) in which the valve portion 24A is separated from the valve hole 29A by a predetermined dimension and a second state (valve closed state, not illustrated) in which the valve portion 24A of the valve shaft 24 is inserted into and brought into close contact with the valve hole 29A.

The drive unit 44 of the on-off valve 12 has a structure similar to that of a drive unit in a normal solenoid valve, and includes a solenoid coil, a plunger, a spring, and the like (all not illustrated) for movement of the valve shaft 24.

### (Flow Adjustment Valve)

The flow adjustment valve 14 of the embodiment is a so-called electric valve capable of adjusting the flow rate, and includes a block 16 having the same configuration as that in the on-off valve 12, as illustrated in Figs. 1 and 2.

In the flow adjustment valve 14, a drive unit 46 including a motor, a screw mechanism, and the like is provided on an upper portion of the block 16, and the drive unit 46 moves a valve shaft 24 along the axial direction of a stepped hole 22 to adjust the distance between a valve portion 24A of the valve shaft 24 and a valve hole 29A, and thus can adjust the flow rate of a fluid passing through the valve hole 29A.

### (Method of Connecting On-Off Valve 12 and Flow Adjustment Valve 14)

Next, a method of connecting the on-off valve 12 and the flow adjustment valve 14 will be described.

In the embodiment, one on-off valve 12 and one flow adjustment valve 14 are included in the valve device 10.

In the valve device 10 of the embodiment, as illustrated in Fig. 2, the on-off valve 12 and the flow adjustment valve 14 are integrated as follows so that the outlet 20 of the on-off valve 12 and an inlet 18 of the flow adjustment valve 14 are connected.

First, the second surface 16R of the block 16 of the on-off valve 12 and a first surface 16L of the block 16 of the flow adjustment valve 14 are made to face each other (in an example, in a state in which the block 16 of the on-off valve 12 and the block 16 of the flow adjustment valve 14 are placed on a smooth plane so that the lower surface of each block 16 is in close contact with the plane), the second surface 16R of the block 16 of the on-off valve 12 and the first surface 16L of the block 16 of the flow adjustment valve 14 are brought into contact with each other so as to compress the O-ring 36 mounted on the seal ring mounting portion 34 and partially protruding from the second surface 16R, and the second pin hole 40 of the block 16 of the on-off valve 12 and a corresponding first pin hole 38 of the block 16 of the flow adjustment valve 14 are made to coincide with each other.

Then, the connection pin 42 having a constant diameter is inserted so as to penetrate the first pin hole 38 and the second pin hole 40, and as a result, the O-ring 36 is held in a compressed state. Thus, the O-ring 36 is in close contact with the groove bottom of the seal ring mounting portion 34 and the first surface 16L of the block 16 of the flow adjustment valve 14, and the portion connecting the inlet 18 and the outlet 20 is sealed to suppress leakage of a fluid from the portion.

The repulsive force of the compressed O-ring 36 (force to return to the original shape before compression) presses the outer peripheral surface of the connection pin 42 against the inner peripheral surface of the first pin hole 38 and the inner peripheral surface of the second pin hole 40, so that a frictional force is generated between the outer peripheral surface of the connection pin 42 and the inner peripheral surface of the first pin hole 38 and between the outer peripheral surface of the connection pin 42 and the inner peripheral surface of the second pin hole 40, and the frictional force suppresses removal of the connection pin 42 from the first pin hole 38 and the second pin hole 40.

The connection pin 42 may be a spring pin. The connection pin 42 may be fixed to the block 16 so as not to be removed, by forming male screws (not illustrated) at both ends of the connection pin 42 and tightening nuts (not illustrated) to the male screws.

When the block 16 of the on-off valve 12 and the block 16 of the flow adjustment valve 14 are connected in this manner, the outflow-side passage 33 of the block 16 of the on-off valve 12 and an inflow-side passage 32 of the block 16 of the flow adjustment valve 14 are connected in a straight line form, so that when a fluid discharged from the on-off valve 12 flows into the flow adjustment valve 14, the resistance can be smaller than in a case in which the outflow-side passage 33 and the inflow-side passage 32 are connected with an angle.

In the valve device 10 of the embodiment, the outlet 20 of the on-off valve 12 and the inlet 18 of the flow adjustment valve 14 are connected without using a pipe, and the lower surfaces 16D of the blocks 16 are aligned horizontally. Therefore, the valve device 10 can be downsized as compared with the case of using a pipe and the case of not aligning the lower surfaces 16D of the blocks 16 horizontally. Thus, an improved valve device is provided.

In a case in which the dimension from the lower surface 16D to the outlet 20 in one block 16 is different from the dimension from the lower surface 16D to the inlet 18 in the other block 16, when the inlet 18 and the outlet 20 are connected so as to face each other, the lower surface 16D of one block 16 and the lower surface 16D of the other block 16 do not coincide with each other, and the one block 16 and the other block 16 cannot be connected without a step, resulting in a large occupancy space in which the valve device 10 is provided.

In the valve device 10 of the embodiment, the block 16 of the on-off valve 12 and the block 16 of the flow adjustment valve 14 are connected using the connection pin 42, and therefore only removing the connection pin 42 can easily separate the on-off valve 12 and the flow adjustment valve 14.

### [Second Embodiment]

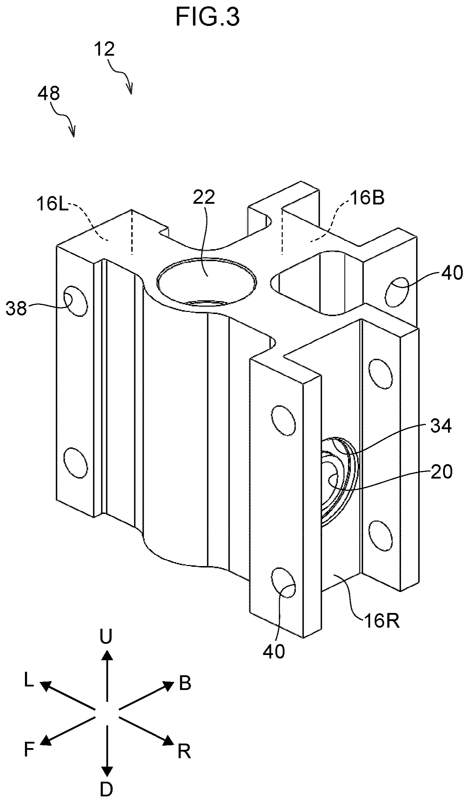

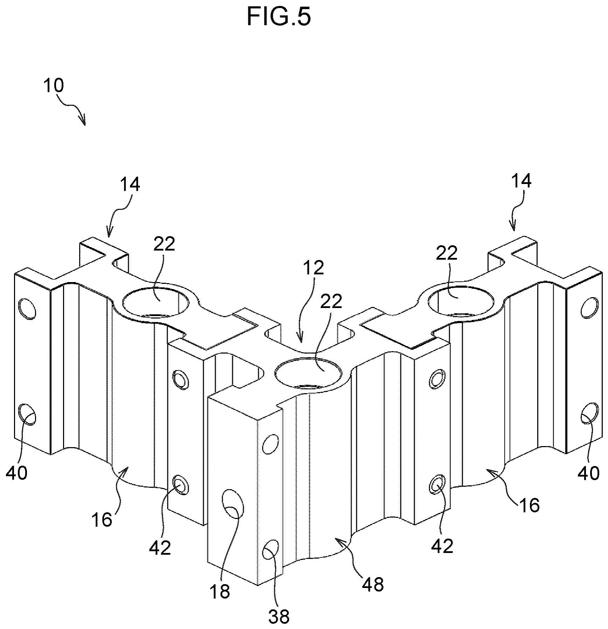

Next, a block 48 of an on-off valve 12 according to a second embodiment will be described with reference to Figs. 3 to 5. The same component as that in the first embodiment is denoted by the same reference sign, and the description of the component will be omitted.

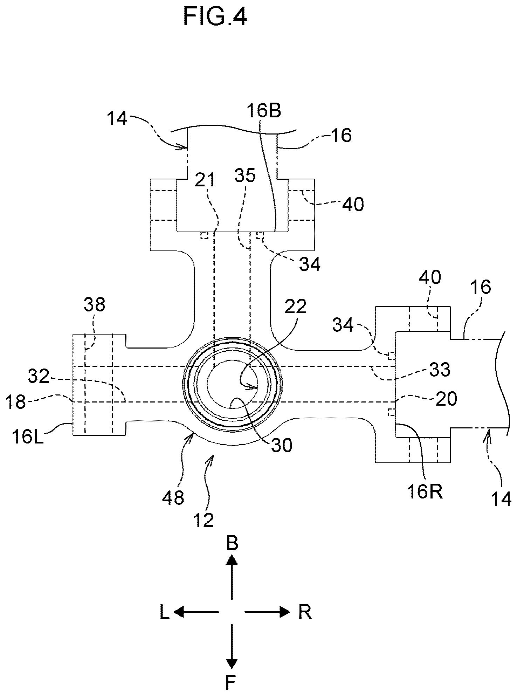

The block 48 is formed in a substantially T shape in plan view, and as illustrated in Fig. 4, an outflow-side passage 33 and a second outflow-side passage 35 orthogonal to each other are connected to a vertical passage 30, the outflow-side passage 33 extends in the direction of the arrow R as in the first embodiment, and the second outflow-side passage 35 extends in the direction of the arrow B.

The block 48 of the present embodiment can distribute a fluid that flows in from an inlet 18 in two directions and can allow the fluid to flow out from an outlet 20 and a second outlet 21.

The outlet 20 of the block 48 in the direction of the arrow B is an example of the second outlet of the disclosure, and the side surface of the block 48 at which the second outlet 21 is opened is a fourth surface 16B that is an example of the fourth surface of the disclosure.

Although not illustrated, the height dimension of the outlet 20 in the arrow R direction side and the height dimension of the second outlet 21 in the arrow B direction from the lower surface of the block 48 are the same as the height dimension of the inlet 18, and the outflow-side passage 35 in the arrow B direction side is also inclined similarly to the outflow-side passage 33 in the arrow R direction side.

As in the first embodiment, a block 16 of a flow adjustment valve 14 can be connected to the outlet 20 side and the second outlet 21 side of the block 48 of the on-off valve 12 of the present embodiment using a connection pin 42.

Thus, in the present embodiment, one on-off valve 12 and two flow adjustment valves 14 are included in the valve device 10.

### [Third Embodiment]

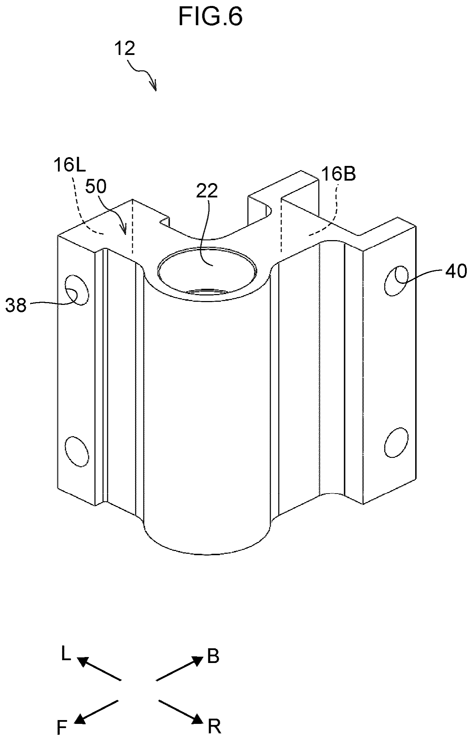

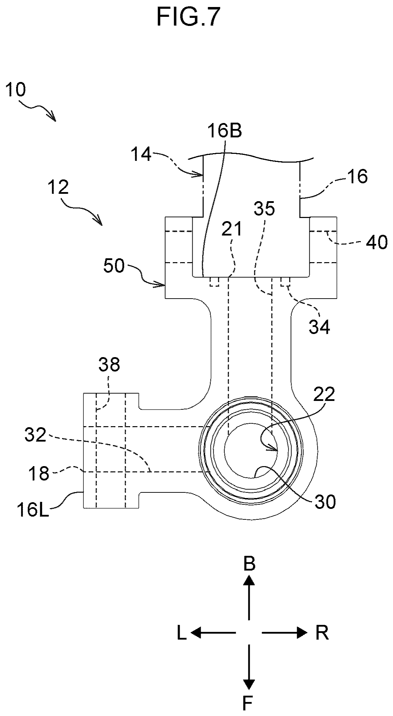

Next, a valve device 10 according to a third embodiment will be described with reference to Figs. 6 and 7. The same component as that in the above-described embodiments is denoted by the same reference sign, and the description of the component will be omitted.

The valve device 10 of the present embodiment includes an on-off valve 12 including a block 50 illustrated in Figs. 6 and 7.

The block 50 is formed in a substantially L shape in plan view, and has a shape obtained by removing a portion protruding in the arrow R direction from the block 48 having a T shape in plan view described in the second embodiment.

As in the second embodiment, the block 50 of the on-off valve 12 of the present embodiment can be connected to a block 16 of a flow adjustment valve 14.

### [Another Embodiment]

Although an embodiment of the valve device of the disclosure is described above, the disclosure is not limited to the above, and it is needless to say that various modifications can be made in addition to the above without departing from the gist of the disclosure.

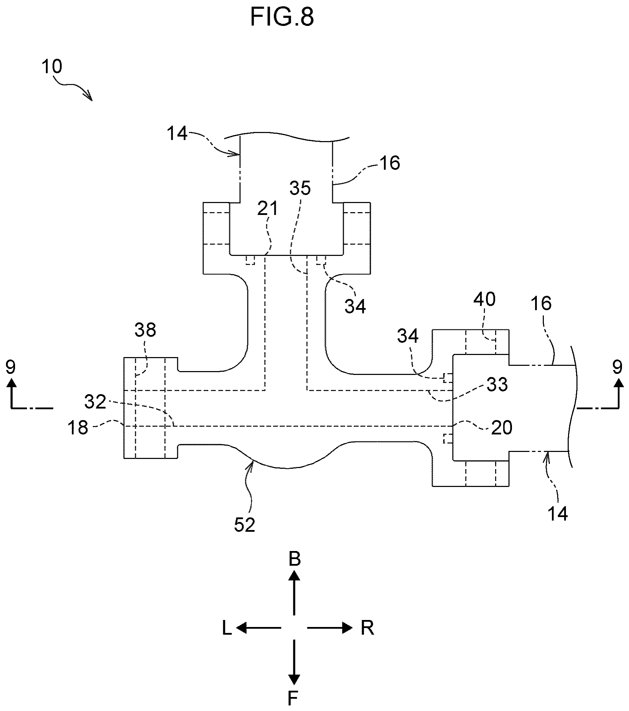

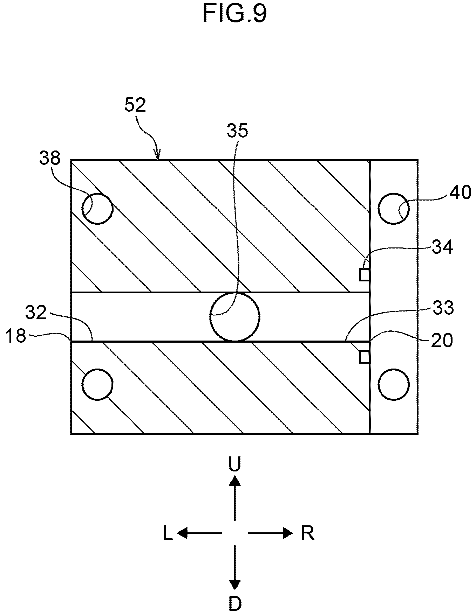

Although the valve device 10 described in the above embodiments is a combination of the on-off valve 12 that is a solenoid valve and the flow adjustment valve 14 that is an electric valve, the disclosure is not limited thereto, and the valve device 10 is to include at least one of the on-off valve 12 that is a solenoid valve or the flow adjustment valve 14 that is an electric valve. For example, as in a valve device 10 illustrated in Figs. 8 and 9, a block 52 having a branching function and two flow adjustment valves 14 may be included and combined. The block 52 includes an outflow-side passage 33 connected to an inflow-side passage 32 into a straight line form and an outflow-side passage 33 orthogonal to the inflow-side passage 32.

In the above embodiments, the valve device 10 is illustrated in a posture in which the drive unit 44 and the drive unit 46 are on the upper side, but the valve device 10 may be used with the drive unit 44 placed in a direction other than the direction toward the upper side.

The above embodiments describe the valve device 10 in which one flow adjustment valve 14 is connected to one on-off valve 12 and the valve device 10 in which two flow adjustment valves 14 are connected to one on-off valve 12, but the number of connected on-off valves 12 and flow adjustment valves 14 is not limited to that in the above embodiments, and four or more on-off valves 2 and flow adjustment valves 14 may be connected.

In the above embodiments, the angle θa of the inclined inflow-side passage 32 and the angle θb of the inclined outflow-side passage 33 are set to the same angle, but the angle θa and the angle θb need not be the same angle. In the above embodiments, the inflow-side passage 32 and the outflow-side passage 33 are inclined in the same direction, but the inflow-side passage 32 and the outflow-side passage 33 may be inclined in different directions.

The above embodiments describe the block 16 having a straight line shape, the block 48 having a T shape, the block 50 having an L shape, and the like in plan view, but the blocks may have another shape such as a cross shape in plan view.

In the above embodiments, the lower surface (third surface) 16D of the block 16 is used as the reference portion, but the disclosure is not limited thereto, and the first pin hole 38 and the second pin hole 40 may be used as the reference portion, and the upper surface 16T may be used as the reference portion.

The disclosure of Japanese Patent Application No. 2023-39145 filed on March 13, 2023 is incorporated herein by reference in its entirety.

All documents, patent applications, and technical standards described herein are incorporated herein by reference to the same extent as in a case in which each document, patent application, and technical standard are specifically and individually stated to be incorporated herein by reference.

## Claims

1. A valve device comprising:
a plurality of blocks each including a first surface at which an inlet of a fluid is formed and a second surface at which an outlet is formed for flowing out of the fluid that flows in from the inlet, the second surface being provided on a side that is different from the first surface;
a control unit provided at at least one of the plurality of blocks and configured to control a flow of a fluid between the inlet and the outlet;
an inflow-side passage configured to link the inlet and the control unit; and
an outflow-side passage configured to link the outlet and the control unit,
wherein, in the plurality of blocks, a dimension from a third surface to the inlet and a dimension from the third surface to the outlet are set to be equal, the third surface being a reference portion that is orthogonal to the first surface and the second surface.

2. The valve device according to claim 1, comprising:
a first pin hole provided at an inlet side of each of the plurality of blocks;
a second pin hole provided at an outlet side of each of the plurality of blocks; and
a seal ring mounting portion provided at the second surface of one of the plurality of blocks or the first surface of another of the plurality of blocks and mounted with an elastic seal ring capable of being in close contact with the first surface of the other of the plurality of blocks or the second surface of the one of the plurality of blocks,
wherein a connection pin is inserted into the second pin hole of the one of the plurality of blocks and the first pin hole of the other of the plurality of blocks to connect the one of the plurality of blocks and the other of the plurality of blocks, the outlet of the one of the plurality of blocks and the inlet of the other of the plurality of blocks are linked to each other, and the elastic seal ring is compressed between the seal ring mounting portion and a surface facing the seal ring mounting portion.

3. The valve device according to claim 1 or 2, wherein
the inflow-side passage and the outflow-side passage are inclined in an identical direction with respect to the third surface.

4. The valve device according to claim 1, wherein:
at least one of the plurality of blocks includes a second outlet that is different from the outlet, the second outlet being provided at a fourth surface that is different from the first surface and the second surface,
a dimension from the third surface to the second outlet is set to be equal to the dimension from the third surface to the outlet, and
a fluid that flows in from the inlet is allowed to flow out from the second outlet.
